# EUROPÄISCHE PATENTSCHRIFT

(11) **EP 1 087 497 B1**
(45) Veröffentlichungstag und Bekanntmachung des Hinweises auf die Patenterteilung: **26.01.2005**
(21) Anmeldenummer: 00115771.8
(22) Anmeldetag: 21.07.2000
(51) Int. Cl.: H02K 1/18, H02K 1/14

(54) **Stator für einen als Innenläufermotor ausgebildeten Elektromotor**
Stator for an inner rotor motor
Stator pour un moteur avec un rotor interne

(30) Priorität: 21.09.1999 DE 29916605 U
(43) Veröffentlichungstag der Anmeldung: 28.03.2001
(73) Patentinhaber: ebm-papst Mulfingen GmbH & Co.KG, 74673 Mulfingen (DE); Kienle & Spiess Stanz- und Druckgiesswerk GmbH, 74343 Sachsenheim (DE)
(72) Erfinder: Müller, Werner Dipl.-Ing., 74673 Mulfingen-Seidelklingen (DE); Wurst, Siegfried, 74321 Bietigheim-Bissingen (DE); Henne, Hermann, 74343 Sachsenheim (DE)
(74) Vertreter: Solf, Alexander, Dr.

(56) Entgegenhaltungen:
- DE-A- 2 134 039
- GB-A- 2 224 399
- US-A- 3 445 702
- PATENT ABSTRACTS OF JAPAN vol. 1998, no. 13, 30. November 1998 (1998-11-30) & JP 10 225038 A (ASMO CO LTD), 21. August 1998 (1998-08-21)
- PATENT ABSTRACTS OF JAPAN vol. 1999, no. 01, 29. Januar 1999 (1999-01-29) & JP 10 271716 A (MATSUSHITA ELECTRIC IND CO LTD), 9. Oktober 1998 (1998-10-09)

## Beschreibung

Die Erfindung betrifft einen Stator für einen als Innenläufermotor ausgebildeten Elektromotor, bestehend aus einem Statorblechpaket aus einzelnen geschichteten Blechzuschnitten mit einem Statorjoch mit einer inneren Aufnahmeöffnung für einen Rotor und mit vom Öffnungsrand in das Innere ragenden Polzähnen aus geschichtexten Blechzuschnitten für das Aufbringen von Statorwicklungen, wobei die Aufnahmeöffnung des Statorjochs an ihrem Umfang verteilt eine der Anzahl der Polzähne entsprechende Anzahl von Fügenuten aufweist, mit denen die Polzähne über ihre Polzahnfüße an dem Statorjoch form- und kraftschlüssig verbunden sind, und wobei außerdem die Aufnahmeöffnung des Statorjochs an ihrem Umfang verteilt neben den Fügenuten eine der Anzahl der Polzähne entsprechende Anzahl von ausgestanzten Stanznuten besizt.

Ähnliche Statorausbildungen sind aus dem Stand der Technik bekannt. So zeigt die DE-A 2 259 191 aus Blechlamellen gebildete Polzähne und Joche, wobei diese aus geblechten Lamellen mit Nutausnehmungen gebildet sind, in die die Polzähne eingeschoben werden, so dass nach dem Montieren ein geschlossenes Ganzes entsteht. Aus der DE-PS 38 33 130 ist ein zweipoliger Motorständer bekannt, der einen im wesentlichen ringförmigen inneren Eisenkreis besitzt, von dessen Außenfläche eine Vielzahl von Zähnen radial nach außen ragen. Ein ringförmiger äußerer Eisenkreis, an dessen Innenflächen Nuten für die Zahnköpfe gebildet sind, weist Wicklungen auf, die vor dem Zusammensetzen der Eisenkerne aufgebracht werden. Die Verbindung der beiden Eisenkerne erfolgt über Nut-Federverbindungen und ist derart dimensioniert, dass eine Preßpassung gebildet wird. Die aus geschichteten Blechzuschnitten gebildeten Eisenkerne und Zähne werden in einem einzigen Stanzvorgang aus einem Coil herausgestanzt. Die einzelnen Blechzuschnitte werden sodann in einem sogenannten Stanzpaketier-Verfahren aufeinander geschichtet und formschlüssig miteinander verbunden. Die Nut-Federverbindung zwischen dem Statorjoch und den Polzähnen weist aber aufgrund der Herstellung durch einen einzigen Stanzvorgang Maßüberschneidungen und Ungleichmäßigkeiten auf, so daß keine absolute gleichmäßige spaltfreie Anlage zwischen Polzahn und Statorjoch gegeben ist, was zu magnetischen Verlusten an den Schnittstellen zwischen beiden Teilen führt. Auch durch die sich im Laufe der Lebensdauer eines Stanzwerkzeuges ändernden Maße der Schnittstelle ist eine prozeßsichere Fertigung und eine konstante Motorqualität nicht gewährleistet. Durch die entstehende Maßüberschneidung kann es auch beim Zusammenfügen der Teile zu Deformierungen der Polzähne und somit zum Ausschuß kommen.

Aus der JP-A-10225038 sind ein Stator eines Elektromotors und dessen Herstellungsverfahren bekannt, wobei zur Bildung von Wicklungen Leitungen in Wicklungsschlitzen von Spulen gewickelt werden. Dabei wird in eine durchgehende Bohrung durch eine fertig gewickelte Spule von innen her ein Zahnglied eingesetzt. Das Zahnglied umfaßt ein Basisteil, einen Körper und einen Kopf. Das Basisteil steht nach dem Einsetzen nach außen über die Wicklungen. vor; während der Körper sich in der durchgehenden Bohrung befindet und der Kopf die Wicklung von innen berührt. Zur Fertigmontage des Stators wird das Basisteil abschließend in axialer Richtung in eine Aussparung eines peripher angeordneten Bauteiles eingedrückt. Besagtes Dokument offenbart weiterhin die Verwendung von Abschlußblechen.

Die DE-A-21 34 039 beschreibt ein Verfahren zur Herstellung eines ausgeprägte Pole aufweisenden Stators einer elektrischen Maschine, bei welchem die aus Blechpaketen und Polwicklungen bestehenden aktiven Teile des Stators in einem Statorgehäuse untergebracht werden und bei welchem mindestens die Hauptpolpakete mit aufgesetzten Hauptpolspulen an wenigstens einem Jochpaket befestigt werden, wobei jedes Hauptpolpaket unter Preßdruck in die Hauptpolspule eingefüllt wird, so daß es von letzterer fest zusammengehalten wird, und wobei die aktiven Statorteile in das Statorgehäuse eingepreßt oder von letzterem umpreßt werden. So können bei der Herstellung eines Stators der eingangs beschriebenen Art jegliche Niet-, Schraub- oder Schweißverbindungen vermieden werden. Die dabei neben Nuten zur Aufnahme von Wendepolwicklungen vorhandenen Fügenuten stimmen in ihrer Zahl mit der Zahl der Polzahnfüße überein, wobei die Fügenuten gestanzt und entsprechend ihrer unterschiedlichen Bestimmung zur Aufnahme von Fußteilen von Hauptpolpaketen und von Wendepolpaketeh unterschiedlich ausgebildet sein können.

Der vorliegenden Erfindung liegt die Aufgabe zugrunde, ausgehend von einem Stator der bekannten Art, diesen derart zu verbessern, daß eine Verbindung zwischen Statorjoch und den Polzähnen erreicht wird, die keine bzw. nur minimale magnetische Verluste aufgrund des Zusammenfügens aufweist und gleichzeitig soll eine prozeßsichere Verbindung der beiden Statorteile gewährleistet werden.

Erfindungsgemäß wird dies dadurch erreicht, daß besagte Stanznuten frei bleiben und dazu dienen, die Form der Polzahnfüße durch das Ausstanzen zu bilden.

Die Erfindung sieht demnach vor, daß die Aufnahmeöffnung des Statorjochs an ihrem Umfang verteilt jeweils der Anzahl der Polzähne entsprechende. ausgestanzte Stanznuten und jeweils der Anzahl der Polzähne entsprechende Fügenuten besitzt, wobei die Form der Polzahnfüße durch Ausstanzen aus den Stanznuten gebildet ist. . Gemäß der Erfindung besitzt der aus einem Coil herausgestanzte Blechzuschnitt, also zunächst sowohl eine Stanz- als auch eine Fügenut, und zwar entsprechend der Anzahl der vorgesehenen Polzähne. Daraus ergibt sich eine Gesamt-Nutanzahl, die doppelt so groß ist wie die Anzahl der Polzahnfüße, nämlich einerseits eine Anzahl von Stanznuten, die der Anzahl der Polzahnfüße entspricht und andererseits eine Anzahl von Fügenuten, die ebenfalls der Anzahl der Polzahnfüße entspricht. Nach dem Ausstanzen werden die .Pölzahnfüße der Polzähne in den Fügenuten form- und kraftschlüssig befestigt. Die Stanznut, die die Stanznegativform des ausgestanzten Polzahnfußes besitzt, dient erfindungsgemäß nicht zur Befestigung des Polzahnfußes. Vielmehr dient hierzu die Fügenut. Diese Fügenut kann nun vorteilhafterweise derart dimensioniert sein, daß stets ein optimales Einpassen des Polzahnfußes möglich ist. D. h. die Maße der Fügenut können derart gewählt bzw. verändert werden, daß auch unter Berücksichtigung eines Verschleißes des Stanzwerkzeuges insbesondere für das Ausstanzen der Polzahnfüße stets eine form- und kraftschlüssige Verbindung gewährleistet wird, bei der eine spaltfreie Anlage zwischen den verbundenen Teilen vorliegt. Somit werden magnetische Verluste an der Schnittstelle der beiden Teile sicher vermieden und die Einhaltung einer konstanten Motorqualität ermöglicht. Zudem kann nach einer gewissen Standzeit bei Verschleiß des Stanzwerkzeuges ohne große Probleme korrigierend auf die Abmessungen der Fügenut des Statorschnittes eingewirkt werden, d. h. die Fügenut kann zwangsläufig auftretenden Veränderungen der Stanznut kostengünstig angepaßt werden, und somit eine über die Gesamtlebensdauer des Stanzwerkzeuges konstante Ausführung der magnetischen Verhältnisse gewährleistet werden.

Weiterhin ist erfindungsgemäß vorgesehen, daß im Statorblechpaket an seinen beiden Stirnflächen und insbesondere auch mindestens einmal innerhalb des Statorblechpaketes ein Abschlußblech angeordnet ist, das eine mittige kreisförmiggeschlossene Öffnung für einen Rotor aufweist und einen rundum geschlossenen Öffnungsrand besitzt, wobei am Öffnungsrand radial nach außen weisende der Form der Polzähne angepaßte Abschlußstege ausgebildet sind. Durch die Verwendung derartiger Abschlußbleche wird ein stabiles Einzelteil, d. h. ein stabiler Stator mit geringen magnetischen Verlusten erhalten.

Anhand der anliegenden Figuren wird die Erfindung näher erläutert. Es zeigen:
- Fig. 1: eine Ansicht eines Blechzuschnittes eines erfindungsgemäßen Statorjoches,
- Fig. 2: eine Ansicht eines erfindungsgemäßen Polzahnsteges aus einem Blechzuschnitt,
- Fig. 3: eine Ansicht eines erfindungsgemäßen Abschlußbleches,
- Fig. 4: einen Schnitt durch einen erfindungsgemäßen Stator und
- Fig. 5: eine Ansicht auf einen erfindungsgemäßen Stator von einer Stirnseite her.

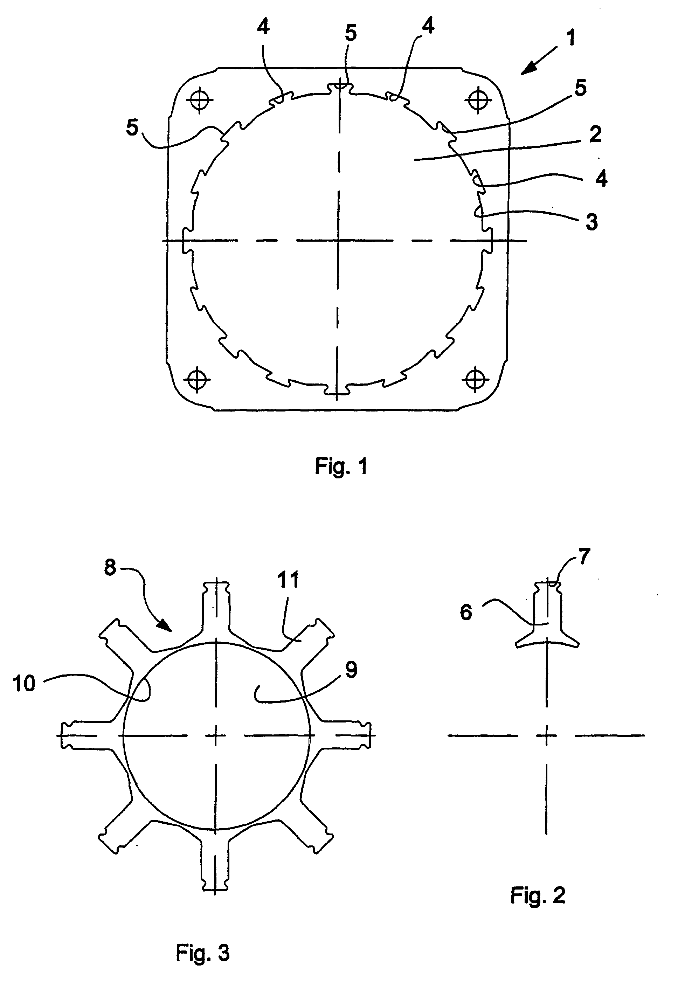

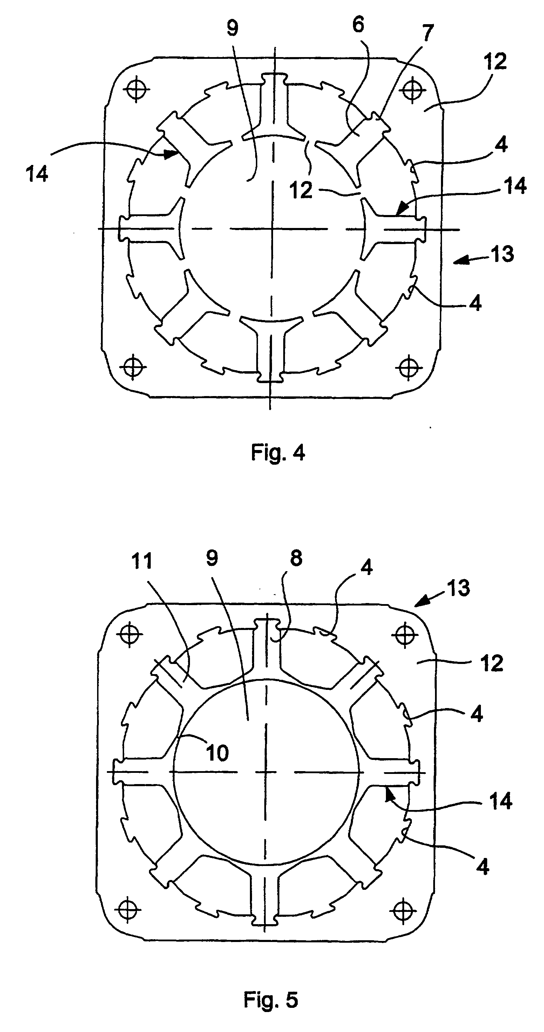

Fig. 1 zeigt einen Blechzuschnitt 1 zur Bildung eines erfindungsgemäßen Statorjochs 12 (Fig. 4) aus einer Vielzahl von geschichteten Blechzuschnitten 1. Dieser Blechzuschnitt 1 weist eine äußere etwa quadratische Kontur auf und eine innere Aufnahmeöffnung 2. In dieser Aufnahmeöffnung 2 läuft beim fertigen Motor der Rotor des als Innenläufer ausgebildeten Elektromotors. Die Aufnahmeöffnung 2 besitzt einen Öffnungsrand 3. Am Umfang des Öffnungsrandes 3 verteilt ist eine der Anzahl der gewünschten Polzähne des herzustellenden Elektromotors entsprechende Zahl Stanznuten 4 und Fügenuten 5 durch Stanzen ausgebildet. Beim Ausstanzen der Stanznuten 4 aus einem Blechcoil, wobei auch gleichzeitig die Fügenuten 5 mit ausgestanzt werden, werden die in Fig. 2 dargestellten Blechzuschnitte zur Herstellung der Polzahnstege 6 ausgestanzt. Diese Blechzuschnitte besitzen einen Stegfuß 7, wobei die Form der Stanznut 4 der Stanznegativform des Stegfußes 7 entspricht. Die Fügenuten 5 besitzen eine derartige Querschnittform, daß die Stegfüße 7 in die Fügenuten 5 form- und kraftschlüssig derart eingepreßt sind, daß eine spaltfreie Anlage zwischen den Stegfüßen 7 und dem Statorjoch aus den Blechzuschnitten 1 besteht. Die form -und kraftschlüssige Verbindung ist als Nut-Federverbindung ausgebildet.

In Fig. 3 ist ein erfindungsgemäßes Abschlußblech 8 dargestellt. Dieses Abschlußblech 8 besitzt eine mittige Öffnung 9, die einen rundum geschlossenen Öffnungsrand 10 aufweist. An diesem Öffnungsrand 10 sind radial nach außen weisende der Form der Polzahnstege 6 angepaßte Abschlußstege 11 ausgebildet. Dieses Abschlußblech 8, das nur in relativ geringer Menge benötigt wird, wird mit einer separaten Stanzfolge im selben Stanzvorgang mit dem Blechzuschnitt hergestellt. Somit werden erfindungsgemäß neben dem hier nicht dargestellten Rotorblechschnitt erfindungsgemäß drei Blechzuschnitte des Statorblechpaketes entweder durch einen gleichzeitigen Stanzvorgang der Blechzuschnitte 1 und 6, oder 1 und 8 hergestellt. Nach dem Stanzvorgang für die Herstellung der erforderlichen Blechzuschnitte 1, 6 und 8 werden die Blechzuschnitte 1 des Statorjoches im bekannten Stanzpaketier-Verfahren geschichtet. Entsprechend werden die Blechzuschnitte für die Polzahnstege 6 geschichtet, wobei zunächst ein oder mehrere Blechzuschnitte, die ein Abschlußblech 8 bilden, als untere Deckbleche eingesetzt werden. Danach werden gegebenenfalls mehrere Blechzuschnitte für die Polzahnstege 6 im Stanzpaketier-Verfahren zusammengefaßt. Danach werden wiederum ein oder mehrere Abschlußbleche 8 eingesetzt und anschließend wieder eine entsprechende Anzahl von Blechzuschnitten für die Polzahnstege 6. Den Abschluß bilden ebenfalls ein oder mehrere Abschlußbleche 8. Die Anzahl der einzusetzenden Abschlußbleche 8 richtet sich nach der Größe des jeweiligen Motors, wobei die erforderliche Stabilität des inneren Statorkranzes, der aus den geschichteten und paketierten Polzahnstegen 6 und Abschlußblechen 8 besteht, im Vordergrund steht. Die paketierten Polzahnstege 6 bilden die Polzähne 14. Es erfolgt dahingehend eine Optimierung, wonach so viele Abschlußbleche 8 wie nötig eingesetzt werden, um die Stabilität des gesamten Stators 13 (Fig. 4, 5) zu gewährleisten, und darüber hinaus so viele Polzahnstege 6 wie möglich, um eine Minimierung des Streuflusses zu erreichen Erfindungsgemäß wird somit ein Stator 13 (Fig. 4, 5) geschaffen, der geringe magnetische Verluste aufweist. Nach der Herstellung der Polzähne 14, wie vorstehend beschrieben, werden die Polzähne 14 mit Wickeldraht bewickelt und entsprechend verschaltet. Es ist ebenfalls möglich, die einzelnen Wicklungen auf Spulenkörper vorzuwickeln und anschließend nur auf die Polzähne 14 aufzuschieben. Die bewickelten Polzähne 14 d. h. der innere Statorkranz wird nun auf eine Stirnseite des aus den Blechzuschnitten 1 gebildeten Statorjochs 12, siehe Fig. 4, aufgesetzt und axial eingepreßt. Hierbei werden die Polzähne 14 mit ihren Zahnfüßen 7 in die Fügenuten 5 eingepreßt. Auf diese Weise wird ein genauer Sitz des inneren Statorkranzes aus geschichteten Polzahnstegen 6 und Abschlußblechen 8 in den Fügenuten .. 5 erreicht. Die Stanznuten 4 bleiben frei. Wie aus Fig. 4 weiterhin ersichtlich ist, sind die einzelnen Polzähne derart ausgebildet, daß zwischen ihnen Nutöffnungen 12 ausgebildet sind.

Fig. 5 ist eine Draufsicht auf einen erfindungsgemäßen Stator 13 im Bereich seiner Ober- bzw. Unterseite oder ein Schnitt in einem Zwischenbereich zwischen Ober- und Unterseite im Bereich eines Abschlußbleches 8 dargestellt. Durch den umlaufenden Rand 10 der Abschlußbleche 8 sind die Nutöffnungen 12 der Polzähne 14 geschlossen, so daß eine gute Stabilität der gesamten Statoranordnung erreicht wird. Durch die Zweiteiligkeit des erfindungsgemäßen Stators 13 kann eine kompakte Direktbewicklung der Polzähne von außen vorgenommen werden, so daß geringe Wickelkopfverluste auftreten. Diese geringen Wickelkopfverluste gleichen zumindest die etwas höheren magnetischen Verluste, bedingt durch die Zweiteiligkeit des erfindungsgemäßen Stators, aus. Da aufgrund des zweiteiligen Stators 13 im Vergleich mit der Innen-Direktbewicklung, insbesondere bei Wicklungsauslegungen mit hohen Windungszahlen ein rationelles und kostengünstiges Einbringen der Wicklung möglich ist, sind die Herstellkosten für die Bewicklung bei nahezu gleichwertigen magnetischen Eigenschaften niedriger.

## Patentansprüche

1. Stator für einen als Innenläufermotor ausgebildeten Elektromotor, bestehend aus einem Statorblechpaket aus einzelnen geschichteten Blechzuschnitten (1) mit einem Statorjoch (12) mit einer inneren Aufnahmeöffnung (2) für einen Rotor und mit vom Öffnungsrand (3) in das Innere ragenden Polzähnen (14) aus geschichteten Blechzuschnitten (6) für das Aufbringen von Statorwicklungen, wobei die Aufnahmeöffnung (2) des Statorjochs (4) an ihrem Umfang verteilt eine der Anzahl der Polzähne (14) entsprechende Anzahl von Fügenuten (5) aufweist, mit denen die Polzähne (14) über ihre Polzahnfüße an dem Statorjoch (12) form- und kraftschlüssig verbunden sind, und wobei außerdem die Aufnahmeöffnung (2) des Statorjochs (4) an ihrem Umfang verteilt neben den Fügenuten (5) eine der Anzahl der Polzähne (14) entsprechende Anzahl von ausgestanzten Stanznuten (4) besitzt,
**dadurch gekennzeichnet, daß** besagte Stanznuten (4) frei bleiben und dazu dienen, die Form der Polzahnfüße durch das Ausstanzen zu bilden.

2. Stator nach Anspruch 1, **dadurch gekennzeichnet,**
**daß** am Statorblechpaket an seinen beiden Stirnflächen jeweils ein Abschlußblech (8) angeordnet ist, das eine mittige, kreisförmige Öffnung (9) für den Rotor aufweist, mit einem rundherum geschlossenen Öffnungsrand (10) sowie vom Öffnungsrand (10) radial nach außen weisende, der Form der Polzähne (14) angepaßte Abschlußstege (11) besitzt.

3. Stator nach Anspruch 2,
**dadurch gekennzeichnet,**
**daß** mindestens ein Abschlußblech (8) zusätzlich im Inneren des Statorblechpaketes angeordnet ist.

## Claims

1. Stator for an electric motor in the form of an internal-rotor motor, comprising a stator laminate core comprising individual, layered laminate blanks (1) having a stator yoke (12) having an inner accommodating opening (2) for a rotor and having pole teeth (14), which protrude into the interior from the opening edge (3), comprising layered laminate blanks (6) for mounting stator windings, the accommodating opening (2) of the stator yoke (4) having a number of joint slots (5), which corresponds to the number of pole teeth (14), distributed over the circumference of said accommodating opening (2), said joint slots (5) being used to connect the pole teeth (14) to the stator yoke (12) in an interlocking and force-fitting manner by means of their pole tooth feet, and the accommodating opening (2) of the stator yoke (4) also having, in addition to the joint slots (5), a number of stamped-out stamped slots (4), which corresponds to the number of pole teeth (14), distributed over the circumference of said accommodating opening (2), **characterized in that** said stamped slots (4) remain free and serve the purpose of forming the shape of the pole tooth feet by being stamped out.

2. Stator according to Claim 1, **characterized in that** arranged on both end faces of the stator laminate core is in each case a cover plate (8), which has a central, circular opening (9) for the rotor, having an opening edge (10) which is unbroken all the way round, and which has cover webs (11), which point radially outwards from the opening edge (10) and are matched to the shape of the pole teeth (14).

3. Stator according to Claim 2, **characterized in that** at least one cover plate (8) is additionally arranged in the interior of the stator laminate core.

## Revendications

1. Un stator pour un moteur électrique présentant la forme d'un moteur rotorique intérieur et comprenant un ensemble de tôles de stator formé par des tôles découpées individuelles (1) présentant un flanc de stator (12) comprenant une ouverture de logement (2) intérieure pour un rotor et des dents de pôle (14) en tôles découpées (6) empilées saillant vers l'intérieur à partir du bord de l'ouverture (3) pour permettre l'application d'enroulements statoriques, l'ouverture de logement (2) du flanc de stator (4) présentant à sa périphérie un nombre de rainures de jonction (5) réparties et correspondant au nombre de dents de pôle (14), auxquelles les dents de pôle (14) sont liées au flanc de stator, par adhésion et par complémentarité de forme via leurs pieds de dent des pôle l'ouverture de logement (2) du flanc de stator (4) présentant par ailleurs sur sa périphérie, outre les rainures de jonction (5), un nombre de rainures de poinçonnage (4) découpées et réparties et correspondant au nombre des dents de pôle (14),
caractérisé en que lesdites rainures de jonction (4) restent découvertes et servent à constituer la forme des pieds de pôle par découpe.

2. Un stator selon la revendication 1,
**caractérisé en ce qu'**une tôle de fermeture (8) est disposée sur chacune des faces frontales de l'ensemble des tôles du stator, ladite tôle de fermeture présentant une ouverture (9) centrale, circulaire pour le rotor, comprenant un bord d'ouverture (10) fermé en cercle ainsi que des barrettes de fermeture (11) orientées radialement vers la périphérie à partir du bord d'ouverture (10) et adaptées à la forme des dents de pôle (14).

3. Un stator selon la revendication 2,
**caractérisé en ce qu'**
au moins une tôle de fermeture (8) est disposée en supplément à l'intérieur de l'ensemble de tôles du stator.
